# FASCICULE DE BREVET EUROPEEN

(11) **EP 4 216 702 B1**
(45) Date de publication et mention de la délivrance du brevet: **11.03.2026**
(21) Numéro de dépôt: 21773818.6
(22) Date de dépôt: 14.09.2021
(51) Int. Cl.: A01B 69/00, G05D 1/00

(54) **PROCÉDÉ DE TRAVAIL D'UNE PARCELLE PAR UNE FLOTTE D'AU MOINS DEUX ROBOTS AGRICOLES**
VERFAHREN ZUR BEARBEITUNG EINER LANDPARZELLE DURCH EINE FLOTTE VON MINDESTENS ZWEI LANDWIRTSCHAFTLICHEN ROBOTERN
METHOD FOR WORKING A PLOT OF LAND BY A FLEET OF AT LEAST TWO AGRICULTURAL ROBOTS

(30) Priorité: 24.09.2020 FR 2009696
(43) Date de publication de la demande: 02.08.2023
(73) Titulaire: Kuhn SAS, 67700 Saverne (FR)
(72) Inventeur: HOELLINGER, Marie, 57720 RIMLING (FR); POTIER, Philippe, 67290 ZITTERSHEIM (FR); LABOUREY, Quentin, 67100 STRASBOURG (FR); JARRASSIER, Benoit, 67700 OTTERSTAHL (FR)
(74) Mandataire: Hager, Esther Evelyne
(86) Numéro de dépôt international: PCT/EP2021/075205
(87) Numéro de publication internationale: WO 2022/063637

(56) Documents cités:
- EP-A1- 3 508 045
- WO-A1-2020/221981
- US-A1- 2017 336 787
- US-B1- 6 205 381

## Description

La présente invention concerne le domaine du machinisme agricole et plus particulièrement du travail du sol ou des végétaux d'une parcelle agricole, et a pour objet un procédé de travail d'une parcelle automatiquement et simultanément par une flotte d'au moins deux machines ou robots agricoles, ainsi qu'un ensemble agricole pour réaliser ce procédé.

Dans le domaine agricole, il est connu que dans le cas du travail d'une parcelle par une flotte de plusieurs engins agricoles autonomes (robots), la répartition du travail au sein de la parcelle est cruciale pour garantir l'efficacité du système. De la même manière, il est vital d'éviter au maximum les collisions possibles entre les différents engins.

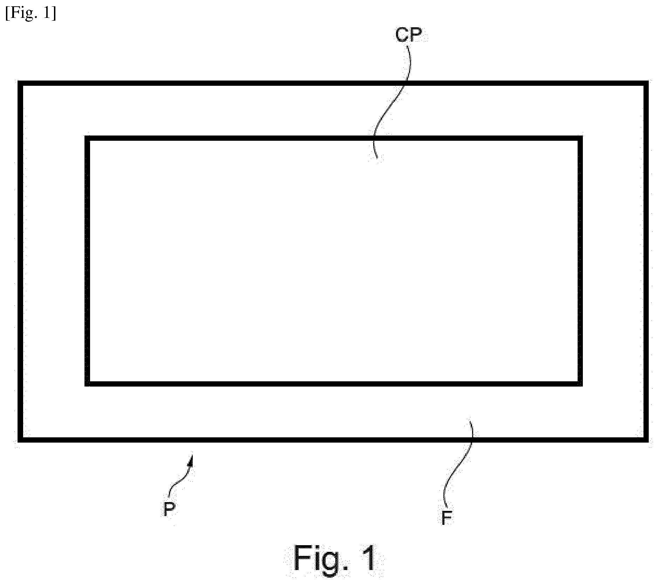

Typiquement, une parcelle P est divisée en un champ principal CP (surface exploitable optimalement) et une zone de fourrière F qui borde ce champ principal sur toute ou partie de sa circonférence périphérique (voir [Fig.1]-fourrière sur tout le pourtour du champ). Cette fourrière est utilisée par les engins pour manœuvrer d'un rang à l'autre du champ principal (demi-tours par exemple).

De manière connue et habituelle, les engins autonomes d'une même flotte communiquent entre eux (par voie radiofréquence, directement ou via un système central) afin de connaitre constamment la position des autres. D'autres solutions de type maître-esclave (un robot esclave suit et reproduit le parcours d'un robot maître) existent également.

Or, ces solutions connues nécessitent des échanges bidirectionnels constants et donc une communication permanente entre les robots : il en résulte des besoins complexes en termes de flux de données et de connexions entre les engins et le réseau.

A titre alternatif, les solutions connues de type maitre-esclave imposent une dépendance du ou des robot(s) esclave(s) vis-à-vis du ou des robot(s) maître(s) : les deux types d'engins ne peuvent donc pas vraiment travailler de manière indépendante, mais uniquement en binômes ou en groupe, ce qui réduit l'efficacité. En outre, il faut à nouveau gérer le ou les robot(s) par le biais d'un lien de communication permanent.

Enfin, d'autres solutions préconisent de diviser la parcelle à travailler en zones de travail de largeur fixe correspondant à la largeur de travail des robots agricoles mis en œuvre et d'affecter ces parcelles aux différents robots, ces parcelles étant affectées/ réaffectées en temps réel en fonction de l'avancement des travaux en cours par les différents robots et de l'évolution de la situation. Une solution de ce type est divulguée par le document EP 3 508 045 ou US 2019/0146513.

Bien que ce dernier type de solution ne nécessite pas de communication permanente, les échanges entre le système de gestion centralisée et les robots sont fréquents et la solution est peu flexible. Par ailleurs, le parcours des engins n'est pas vraiment connu à l'avance. De plus, la gestion des collisions entre robots peut rapidement devenir très complexe.

Les documents US 2017/336787 A1 et US 6 205 381 B1 représentent des procédés connus de travail d'une parcelle par une flotte d'au moins deux machines ou robots agricoles.

Le document US 2017/336787 Al ne décrit pas d'affectation progressive des zones de travail en fonction de l'achèvement des travaux en cours. L'affectation de nouvelles zones dans ce document n'intervient qu'en cas de panne, mauvais fonctionnement ou mauvaises conditions météo, comme indiqué dans les paragraphes [0034] et [0035]. Autrement, l'affectation des zones, en conditions normales, n'évolue pas au cours du travail.

La présente invention a pour notamment pour but de pallier les inconvénients de ce dernier type de solution.

A cet effet, elle a pour objet un procédé de travail d'une parcelle simultanément par une flotte d'au moins deux machines ou robots agricoles à fonctionnement autonome et indépendant, en accord avec des consignes et/ou des commandes transmises par un système central commun de gestion et de pilotage, procédé tel que défini par la revendication 1.

L'invention sera mieux comprise, grâce à la description ci-après, qui se rapporte à des modes de réalisation préférés, donnés à titre d'exemples non limitatifs, et expliqués avec référence aux dessins schématiques annexés illustrant tous en vues de dessus des parcelles agricoles, et dans lesquels :
[Fig.2] représente, pour une parcelle rectangulaire, une division du champ partielle avec alternance des zones de travail selon un motif ou schéma répétitif du type A-B-C, A-B-C,... ;
[Fig.3] représente une division du champ totale avec alternance de zones de travail uniformes selon le même motif ou schéma répétitif que celui de la [Fig.2] (type A-B-C, A-B-C,...) et avec une bande (terminale) de taille différente (de largeur plus faible) ;
[Fig.4] représente une division du champ totale avec alternance de zones de travail uniformes selon un motif ou schéma répétitif différent de celui de la [Fig.3] (type A-B-C, B-A-C, B-A...) et avec une bande (terminale) de taille différente ;
[Fig.5] représente une division du champ totale avec alternance de zones de travail uniformes selon le même motif ou schéma répétitif que celui de la [Fig.2] (type A-B-C, A-B-C,...), mais avec une bande (terminale) de taille différente et des bandes intermédiaires « vides », non travaillées par les robots agricoles ;
[Fig.6] représente une division du champ partielle avec alternance des zones de travail, les principaux composants constitutifs d'un exemple d'ensemble agricole pour la réalisation du procédé selon l'invention (système central de gestion et de pilotage - engins robotisés autonomes de travail agricole) étant représentés ;
[Fig.7] représente, pour une parcelle à configuration circulaire, une division du champ totale avec alternance des zones de travail selon un motif ou schéma répétitif du type A-B-C, A-B-C,... (comme pour les figures 2 et 3) et avec une bande de fourrière centrale (s'étendant selon un rayon) ;
[Fig.8A] et
[Fig.8B] sont des représentations similaires à celles des figures 2 à 5 illustrant respectivement l'ajout d'un engin robotisé ([Fig.8A]) et la suppression d'un engin robotisé ([Fig.8B]) au cours de l'exécution du procédé de travail d'une parcelle selon l'invention, et,
[Fig.9A],

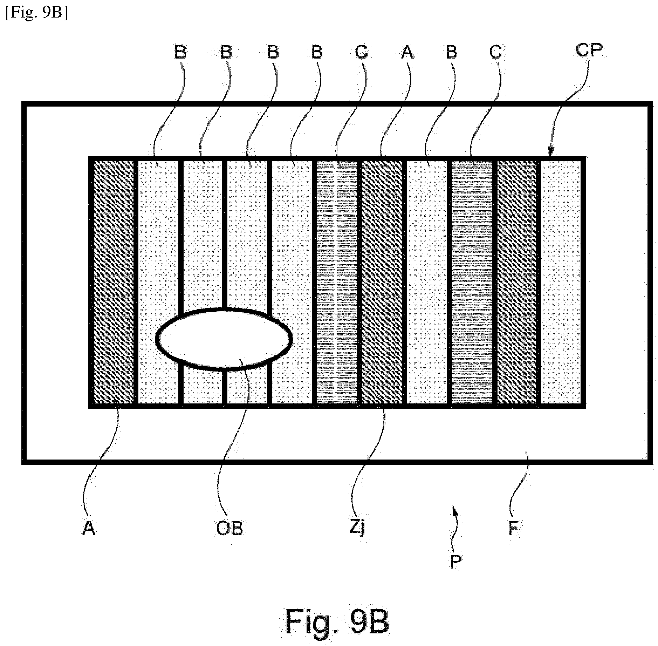

[Fig.9B] et

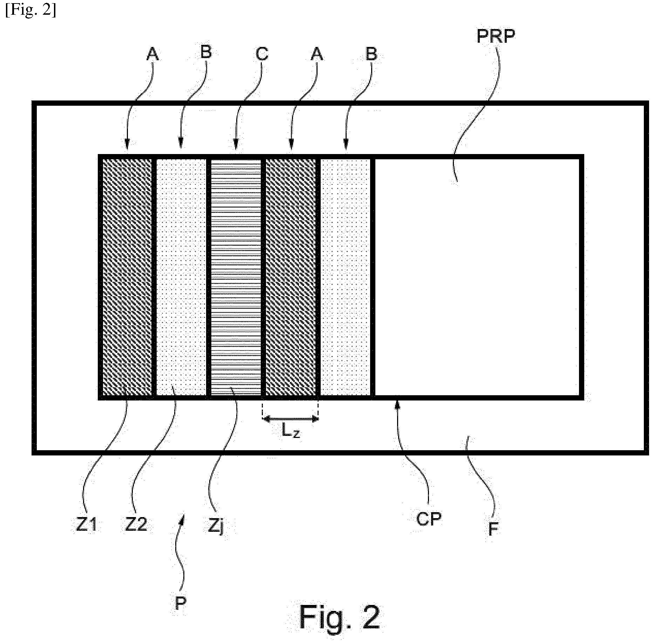

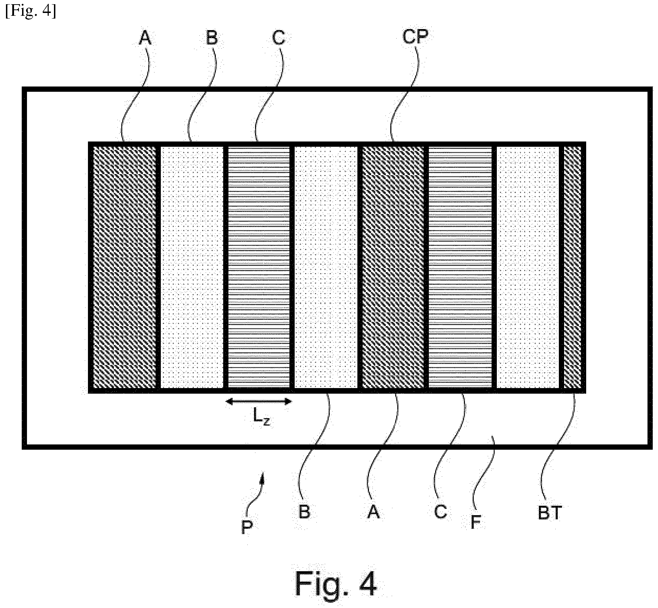

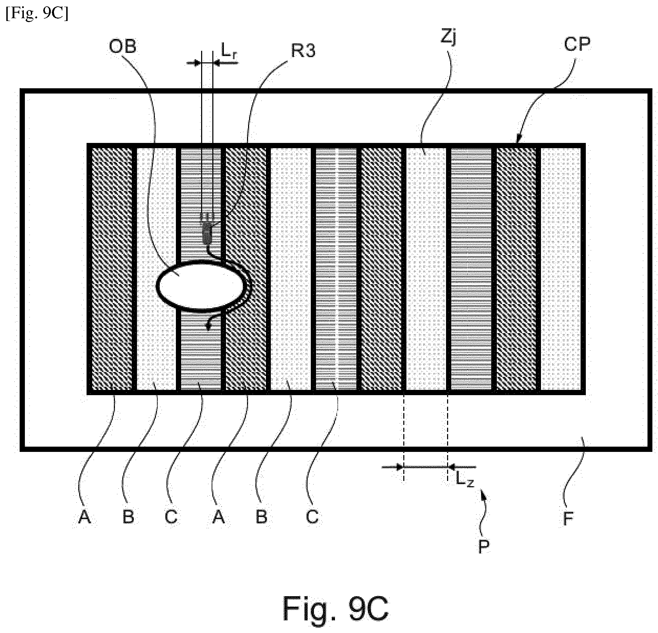

[Fig.9C] sont des représentations similaires à celles des figures 2 à 5 illustrant respectivement différents exemples de modes de gestion de la présence d'un obstacle de taille relativement importante (notamment par exemple supérieure à la largeur d'une zone de travail) en accord avec l'invention.

Comme cela ressort des figures 2 à 9, la présente invention a pour objet un procédé de travail d'une parcelle (P) simultanément par une flotte d'au moins deux machines ou robots agricoles (R1, R2, ..., Ri) à fonctionnement autonome et indépendant, en accord avec des consignes et/ou des commandes transmises par un système central commun de gestion et de pilotage (SC).

Les travaux réalisés par les robots peuvent viser toutes les opérations agricoles courantes (travail du sol de la préparation avant semis jusqu'au traitement après récolte) et être dépendants du type de culture, de la saison, de la nature du sol, des conditions météorologiques, etc.

Conformément à l'invention, ce procédé consiste à subdiviser ladite parcelle (P) à travailler, préalablement au début du travail de cette parcelle (P) ou progressivement durant le travail de celle-ci, en au moins deux zones de travail distinctes (Z1, Z2, ..., Zj), l'ensemble desdites zones de travail couvrant surfaciquement sensiblement la totalité de la surface exploitable de la parcelle et chaque zone de travail consistant en une fraction de parcelle en forme de bande, et à affecter chaque zone de travail (Z1, Z2, Zj) exclusivement à un des robots agricoles (R1, R2, Ri), au moins pendant la phase de travail considéré. La largeur (Lz) de chaque zone de travail (Z1, Z2, Zj) est égale à un multiple, supérieur ou égal à 1 et préférentiellement entier, de la largeur de travail (Lr) du robot agricole (R1, R2, Ri) qui lui est exclusivement affecté. En outre, l'affectation exclusive, en cours de réalisation du travail de la parcelle (P), des zones de travail (Z1, Z2, Zj) non encore travaillées, respectivement aux différents robots agricoles (R1, R2, Ri), s'effectuant progressivement en fonction de l'achèvement des travaux en cours dans les différentes zones de travail par les robots agricoles qui leur ont été respectivement affectés

Ainsi, en accord avec l'invention, la surface exploitable CP de la parcelle P considérée (ou champ principal) est divisée en zones de travail attribuées chacune de manière exclusive à un robot de la flotte présente. La zone réservée à un robot ne peut être parcourue que par ce dernier pendant la durée du travail qu'il doit y réaliser : il travaille cette zone de manière indépendante, en fonction de sa programmation (et/ou des ordres spécifiques transmis par le système central avant le début et/ou pendant la durée du travail dans la parcelle ou dans la zone considérée) et sans être perturbé par un quelconque autre robot présent sur la parcelle.

Grâce aux dispositions précitées, la solution fournie par l'invention permet de simplifier notablement la gestion des conflits et des collisions entre robots, de gérer le travail dans chaque zone de travail de manière indépendante, d'autoriser une grande flexibilité dans le nombre d'engins travaillant simultanément sur une parcelle donnée et surtout de s'affranchir de toute nécessité de communication entre robots, chacun d'entre eux ne travaillant que dans les limites d'une zone qui lui a été exclusivement attribuée.

En outre, les positions respectives des robots n'ont pas à être connues entre eux. En effet, les déplacements des robots sont gérés de manière centralisée par le système de gestion et de pilotage, qui contrôle aussi l'attribution des zones de travail, la définition des paramètres de travail de chaque robot, etc. Chaque robot communique donc exclusivement avec le système de gestion et de pilotage et non avec un quelconque autre robot.

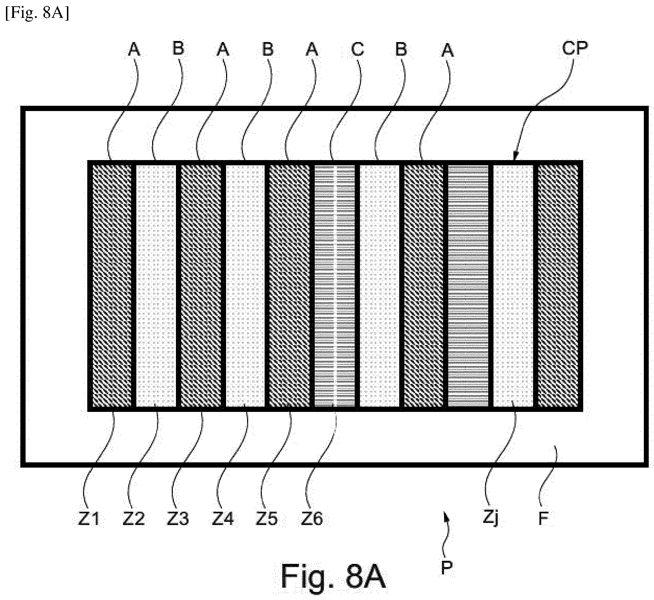

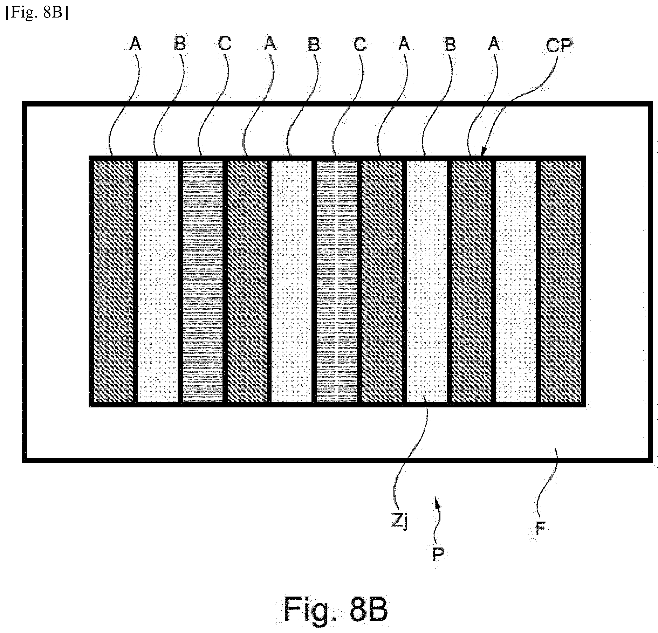

De plus, le procédé selon l'invention permet de s'adapter facilement aux ajouts/ suppressions de robots en cours de travail sur une parcelle (voir figures 8) et d'avoir des zones de travail de largeurs différentes, autorisant aussi de trouver un compromis optimal dans les déplacements des robots entre zones successives à travailler.

Enfin, il est aussi possible de mettre en œuvre aisément des demi-tours, manœuvres ou zones de ravitaillement aux deux extrémités des zones de travail, dans des régions de fourrières exclusives associées respectivement auxdites zones de travail.

Ainsi, le croisement de robots dans les régions de fourrière peut être limité, voire totalement évité.

Comme le montrent à titre d'exemples les figures annexées, la subdivision en zones en forme de bandes successives voisines suit un ordre de succession d'un bout à l'autre de la parcelle considérée, les différentes bandes pouvant avoir des largeurs toutes identiques, toutes différentes ou encore pour certaines différentes et pour d'autres identiques. Le nombre de zones de travail obtenues après la subdivision est préférentiellement supérieur ou au moins égal au nombre de robots prévus pour travailler la parcelle.

Le schéma d'attribution des différentes zones de travail aux différents robots, en début ou en cours d'un cycle de travail sur une parcelle donnée, peut suivre des règles et une logique prédéterminées, par exemple un schéma arbitraire imposé, une répétition régulière, une affectation en fonction de l'avancement du travail de chaque robot, une affectation en fonction de la première zone non attribuée dans l'ordre de succession topographique des zones prédécoupées, etc.

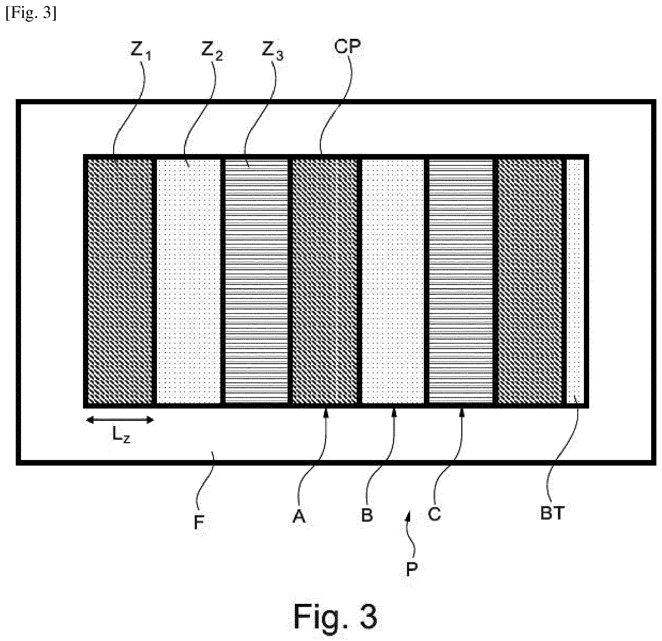

En accord avec un premier mode de réalisation, ressortant par exemple des figures 3 à 5 et 7, il peut être prévu qu'après une affectation initiale d'une première zone de travail exclusive à chaque robot agricole, les affectations suivantes, en cours de réalisation du travail de la parcelle (P), des zones de travail restant encore à travailler (aux différents robots agricoles) s'effectuent progressivement en fonction de l'achèvement des travaux en cours dans les différentes zones de travail par les robots agricoles qui leur ont été respectivement affectés.

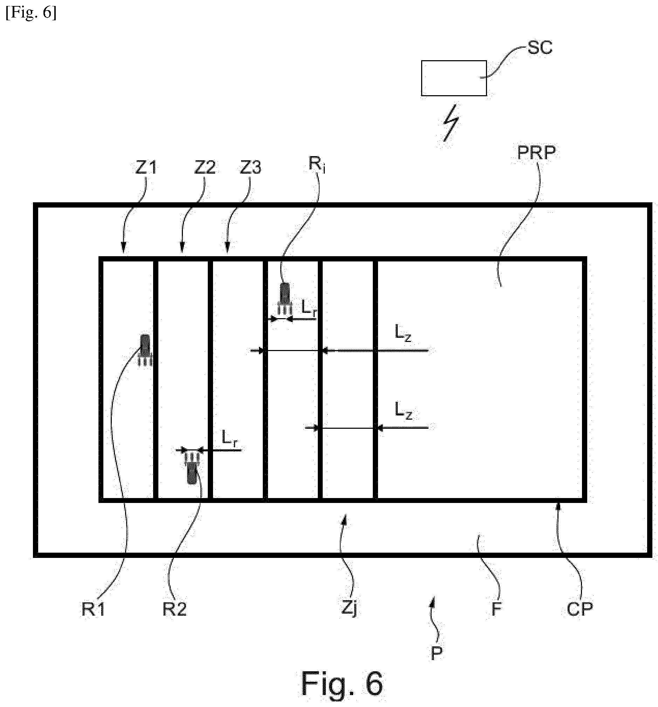

En accord avec un second mode de réalisation, ressortant des figures 2 et 6, il peut être prévu que toutes les zones de travail (Z1, Z2, Zj) sont attribuées aux différents robots agricoles (R1, R2, Ri), avec une affectation exclusive d'un robot par zone, en début de travail de la parcelle (P), une possible réattribution des zones de travail non encore travaillées, entre les différents robots agricoles considérés, pouvant intervenir à un instant déterminé au cours de la réalisation du travail de la parcelle (P), ce en fonction de l'évolution du comportement, de la disponibilité et/ou de l'état des différents robots, ou encore de l'avancement réel ou prévisible des travaux dans les zones de travail encore soumises à l'instant précité au travail par les robots respectifs qui leur ont été exclusivement affectés.

Les cas de rajout et de suppression d'un robot sont illustrés schématiquement par le biais des motifs des zones de travail sur les figures 8A et 8B.

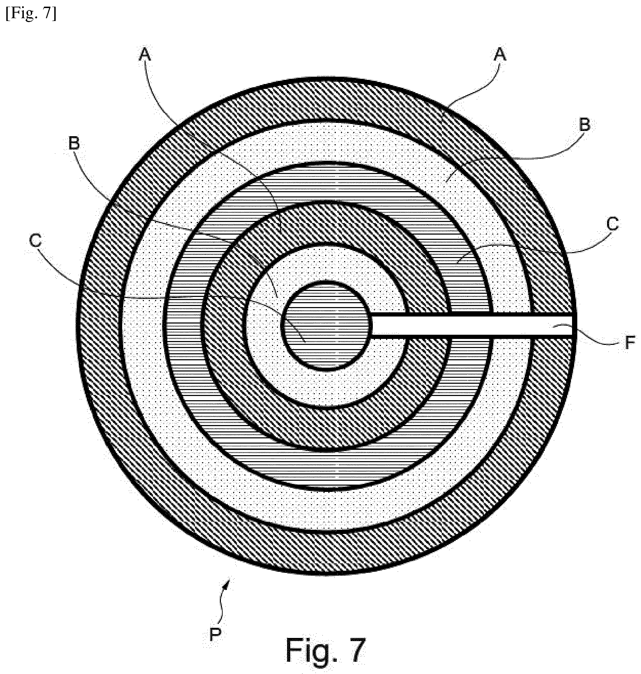

Préférentiellement, au moins l'affectation initiale ou première affectation des zones de travail (Z1, Z2, Zj) exclusives suit une règle d'attribution (alternative, cyclique, répétitive ou arbitraire) des différents robots aux zones de travail voisines successives résultant de la subdivision de la parcelle (P). Comme le montrent les figures 2 à 9, ces zones de travail peuvent consister soit en des bandes arrangées côte à côte et sensiblement rectilignes, dans le cas d'une parcelle (P) de forme polygonale avec une fourrière (F) périphérique au moins partielle (figures 2 à 6, 8 et 9), soit en des bandes sensiblement circulaires (annulaires) et arrangées concentriquement entre elles, dans le cas d'une parcelle (P) de forme discoïdale avec une fourrière (F) s'étendant selon un rayon ([Fig.7]).

Pour rationaliser et uniformiser les opérations réalisées simultanément par plusieurs robots sur une parcelle donnée, il est avantageusement prévu de mettre en œuvre des robots agricoles (R1, R2, Ri) réalisant le même type de travail, lesdits robots présentant préférentiellement des largeurs de travail (Lr) identiques, et étant avantageusement d'un même type. Néanmoins, des robots présentant des largeurs de travail (Lr) différentes, mais effectuant le même type de travail, peuvent aussi être mis en œuvre dans le cadre de l'invention (par exemple des modèles de tailles différentes d'un même type de robot). Dans ce dernier cas, les zones de travail pourraient avoir des largeurs (Lz) adaptées différentes (non représenté).

Le cas échéant, deux flottes différentes de robots réalisant des travaux complémentaires peuvent être actives en même temps sur une même parcelle, notamment une parcelle de grande taille, une première flotte terminant le travail qui lui échoit alors que l'autre flotte débute le sien, préférentiellement à deux extrémités opposées de la parcelle.

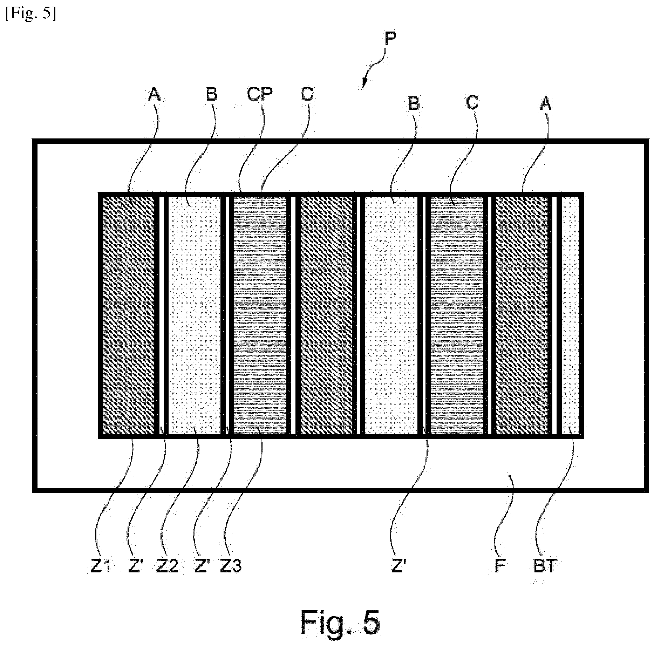

Afin par exemple d'éviter tout risque de collision entre robots travaillant dans des zones voisines, de disposer éventuellement de bandes de circulation non travaillées et/ ou de laisser des bandes en jachère ou en culture différentiée, il peut être prévu, comme le montre la [Fig.5], de prévoir, entre au moins deux zones de travail (Z1, Z2, Zj) voisines, une zone intermédiaire (Z') en forme de bande (par exemple de quelques centimètres à quelques dizaines de centimètres) ne devant pas subir de travail par les robots agricoles (R1, R2, Ri).

Selon une autre caractéristique fonctionnelle possible de l'invention, le procédé peut consister éventuellement à réaliser une nouvelle affectation des zones de travail (Z1, Z2, Zj) non encore travaillées aux différents robots agricoles (R1, R2, Ri) présents et fonctionnels, lors de l'ajout d'un nouveau robot, lors du retrait ou du départ d'un robot ou encore lors d'une mise à l'arrêt d'un robot en activité dans une zone de travail, cette réaffectation étant opérée par le système central commun de gestion et de pilotage (SC) et transmise aux différents robots, le cas échéant après réalisation d'une nouvelle subdivision de la partie restante (PRP) de la parcelle (P) encore à traiter à ce moment-là.

Conformément à une autre caractéristique possible de l'invention, la subdivision de la parcelle (P) et l'attribution des zones de travail exclusives (Z1, Z2, Zj) aux différents robots agricoles (R1, R2, Ri) peut tenir compte d'une minimisation des croisements desdits robots au niveau de la ou des fourrière(s) (F) lors de changements de zones de travail.

Les opérations de travail agricole sont, en accord avec l'invention, effectuées de manière indépendante dans chaque zone par les différents robots de la flotte affectée à la parcelle, des réglages de paramètres de travail spécifiques à chaque zone étant bien entendu possibles, adaptés notamment à des situations d'exploitation voulues ou subies différentes, comme par exemple :
- pour une zone en dévers, la vitesse de travail peut être plus lente ;
- pour une zone présentant une composition du sol différente (pierres, argile, sable, etc.), la profondeur de travail et/ou les réglages des outils et/ou des engins peuvent être spécifiques ;
- pour des conditions locales particulières et différentiées : possibilité de moduler les doses de produits appliqués à chaque zone (densité de semis, produits phytosanitaires, irrigation, type d'opération réalisée, ...) ;
- pour une exploitation flexible de la parcelle : possibilité de semer des variétés différentes dans chaque zone.

Par ailleurs, concernant la définition et l'attribution des zones de travail, les considérations suivantes peuvent être envisagées :
- les tailles des zones de travail peuvent être influencées par d'autres facteurs que la largeur de travail du robot agricole : des réglages d'outils, des contraintes topographiques et/ou géographiques peuvent avoir une plus grande importance ;
- une zone de travail donnée peut avoir une largeur Lz inférieure à la largeur de travail Lr du robot qui lui est affecté : voir notamment les dernières zones ou bandes terminales BT des figures 3 à 5 (fins de parcelles, etc.) ;
- la zone de travail suivante que l'on attribue à un robot donné n'est pas forcément adjacente ou "collée" à celle que ce robot vient de terminer (on peut "sauter" des zones non-travaillées, dans l'ordre de succession par proximité) ;
- la fin de la tâche à effectuer dans une zone de travail ne correspond pas forcément à une exécution du travail par le robot affecté sur 100 % de la surface de la zone considérée : la logique d'attribution appliquée par le système central (SC) peut éventuellement décider de faire passer ledit robot à une zone suivante alors que le travail dans la zone actuellement travaillée n'est pas complètement achevé (robot en panne, gain de temps, limitation des manœuvres inutiles, etc.) ;
- lors d'un changement de zone de travail par un robot donné, la zone dans laquelle il vient d'achever son travail est "libérée" et un autre robot peut y entrer pour y effectuer un autre travail.

Un problème délicat peut se poser en cas de présence d'un obstacle (naturel ou non), notamment de taille relativement importante (gros rocher, pylône, monticule, lac, ...) dans la parcelle à travailler.

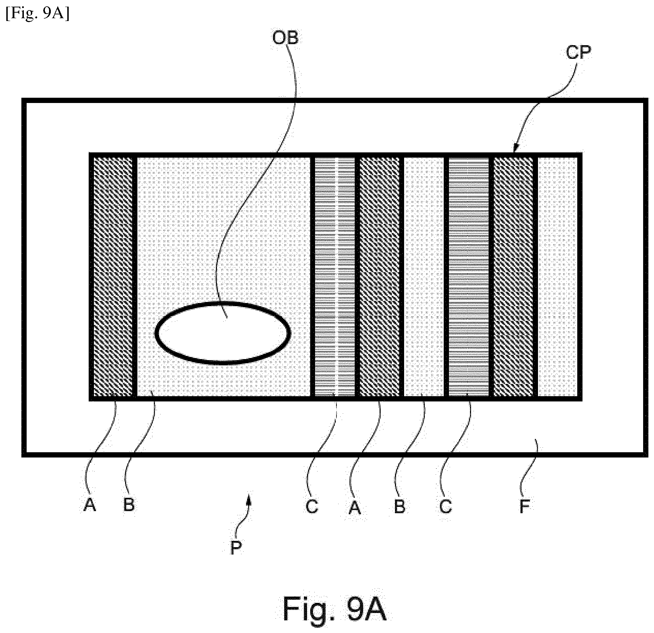

Plusieurs solutions peuvent être envisagées et mises en œuvre pour éviter que les robots agricoles ne sortent de leurs zones de travail respectives pour contourner l'obstacle :
- définir une grande zone de travail qui comprend la totalité de l'obstacle (OB) comme représenté par exemple sur la [Fig.9A] ;
- définir des zones de travail de largeurs standards et "réserver" plusieurs zones adjacentes qui comprennent l'obstacle (OB) à un même robot comme représenté sur la [Fig.9B] ;
- définir des zones de travail de largeurs standards et obliger le robot considéré à passer par une autre zone adjacente, après avoir attendu que celle-ci soit libérée avant de l'emprunter comme représenté à la [Fig.9C].

Dans tous les cas, l'obstacle et la manière dont il est contourné sont à prendre en compte dans la définition de la taille des zones et dans leur logique d'attribution aux robots concernés (prise en charge par le système central de gestion et de pilotage).

Le traitement des fourrières, et le travail réalisé au niveau de celles-ci, peut avantageusement être basé sur une logique spécifique (voir à ce sujet la demande de brevet déposée en parallèle ce jour par la demanderesse).

On peut relever que toutes les parcelles ne disposent pas forcément de fourrières (zones F) qui font tout le tour complet de la surface exploitable (champ principal CP), elles peuvent n'être présentes que de deux côtes (seulement en haut et en bas sur les figures annexées par exemple).

Il peut également ne pas y avoir de fourrière du tout, les manœuvres se faisant alors à l'intérieur même du champ principal (confusion entre parcelle et champ principal), sans que cela ne change le principe de l'invention.

Enfin, lorsque la ou les fourrière(s) est (sont) considérée(s) comme faisant partie de la surface exploitable de la parcelle, cette (ces) dernière(s) peut (peuvent) être travaillée(s) soit par portions par chacun des robots affectés aux différentes zones de travail (en extrémité de ces dernières), soit par au moins un robot dédié comme étant une zone de travail particulière, au moins un autre robot (avantageusement plusieurs) étant alors affecté au travail du champ principal. Dans une configuration minimale, seuls deux robots peuvent être mis en œuvre (un pour le champ principal et un pour la fourrière).

L'invention vise également, comme le montre la [Fig.6] de manière schématique, un ensemble agricole pour le travail automatisé de parcelles (P).

Cet ensemble comprend essentiellement une flotte d'au moins deux machines ou robots agricoles (R1, R2, ..., Ri) mobiles, équipés d'outils adéquats, à fonctionnement autonome et indépendant, et un système central commun de gestion et de pilotage (SC) apte à communiquer avec lesdits robots en vue de leur transmettre des consignes et/ou des commandes et de recevoir en retour des informations de fonctionnement et/ou d'état desdits robots, chaque robot étant en outre pourvu d'un dispositif de positionnement ou de localisation par satellites.

Cet ensemble est caractérisé en ce que ledit système central de gestion et de pilotage (SC) comprend des moyens permettant, d'une part, de subdiviser ladite parcelle (P) à travailler, préalablement au début du travail de cette parcelle (P) et/ou progressivement durant le travail de celle-ci, en au moins deux zones de travail distinctes (Z1, Z2, ..., Zj), l'ensemble desdites zones de travail couvrant, de manière avantageuse, surfaciquement sensiblement la totalité de la parcelle et chaque zone de travail consistant en une fraction de parcelle en forme de bande, et, d'autre part, d'affecter chaque zone de travail (Z1, Z2, Zj) exclusivement à un des robots agricoles (R1, R2, Ri), au moins pendant la phase de travail considéré, la largeur (Lz) de la majorité des zones de travail (Z1, Z2, Zj) étant supérieure ou égale à la largeur de travail (Lr) du robot agricole (R1, R2, Ri) qui lui est exclusivement affecté, en étant avantageusement égale à un multiple, préférentiellement entier, de la largeur de travail (Lr) du robot agricole (R1, R2, Ri) qui lui est exclusivement affecté et l'affectation exclusive, en cours de réalisation du travail de la parcelle (P), des zones de travail (Z1, Z2, Zj) non encore travaillées aux différents robots agricoles (R1, R2, Ri) s'effectuant progressivement en fonction de l'achèvement des travaux en cours dans les différentes zones de travail par les robots agricoles qui leur ont été respectivement affectés.

Cet ensemble met en œuvre le procédé décrit précédemment pour assurer la gestion de la flotte de robots (R1, R2, Ri) durant le travail d'une parcelle (P).

Bien entendu, l'invention n'est pas limitée aux modes de réalisation décrits et représentés aux dessins annexés. Des modifications des modes de réalisation restent possibles, notamment du point de vue de la constitution des divers éléments, sans sortir pour autant du domaine de protection de l'invention tel que défini par les revendications.

## Revendications

1. Procédé de travail d'une parcelle (P) simultanément par une flotte d'au moins deux machines ou robots agricoles (R1, R2, ..., Ri) à fonctionnement autonome et indépendant, en accord avec des consignes et/ou des commandes transmises par un système central commun de gestion et de pilotage (SC), procédé qui consiste à subdiviser ladite parcelle (P) à traiter, préalablement au début du travail de cette parcelle (P) ou progressivement durant le travail de celle-ci, en au moins deux zones de travail distinctes (Z1, Z2, ..., Zj), l'ensemble desdites zones de travail couvrant surfaciquement, de manière avantageuse, sensiblement la totalité de la surface exploitable de la parcelle et chaque zone de travail consistant en une fraction de parcelle en forme de bande, et à affecter chaque zone de travail (Z1, Z2, Zj) exclusivement à un des robots agricoles (R1, R2, Ri), au moins pendant la phase de travail considéré, la largeur (Lz) de la majorité des zones de travail (Z1, Z2, Zj) étant égale à un multiple, supérieur ou égal à 1 et préférentiellement entier, de la largeur de travail (Lr) du robot agricole (R1, R2, Ri) qui lui est exclusivement affecté et l'affectation exclusive, en cours de réalisation du travail de la parcelle (P), des zones de travail (Z1, Z2, Zj) non encore travaillées, respectivement aux différents robots agricoles (R1, R2, Ri), s'effectuant progressivement en fonction de l'achèvement des travaux en cours dans les différentes zones de travail par les robots agricoles qui leur ont été respectivement affectés, et en ce que le système central commun de gestion et de pilotage (SC) permet de s'affranchir de toute nécessité de communication entre les robots agricoles (R1, R2, Ri).

2. Procédé selon la revendication 1, **caractérisé en ce que**, après une affectation initiale d'une première zone de travail exclusive à chaque robot agricole, les affectations suivantes, en cours de réalisation du travail de la parcelle (P), des zones de travail restant encore à travailler aux différents robots agricoles s'effectuent progressivement en fonction de l'achèvement des travaux en cours dans les différentes zones de travail par les robots agricoles qui leur ont été respectivement affectés.

3. Procédé selon la revendication 1, **caractérisé en ce que** toutes les zones de travail (Z1, Z2, Zj) sont attribuées aux différents robots agricoles (R1, R2, Ri), avec une affectation exclusive d'un robot par zone, en début de travail de la parcelle (P), une réattribution des zones de travail non encore travaillées, entre les différents robots agricoles considérés, intervenant à un instant déterminé au cours de la réalisation du travail de la parcelle (P), ce en fonction de l'évolution du comportement, de la disponibilité et/ou de l'état des différents robots, ou encore de l'avancement réel ou prévisible des travaux dans les zones de travail encore soumises à l'instant précité au travail par les robots respectifs qui leur ont été exclusivement affectés.

4. Procédé selon l'une quelconque des revendications 1 à 3, **caractérisé en ce qu'**au moins l'affectation initiale ou première affectation des zones de travail (Z1, Z2, Zj) exclusives suit une règle d'attribution alternative, cyclique, répétitive ou arbitraire, des différents robots aux zones de travail voisines successives résultant de la subdivision de la parcelle (P), lesdites zones de travail consistant soit en des bandes arrangées côte à côte et sensiblement rectilignes, dans le cas d'une parcelle (P) de forme polygonale avec une fourrière (F) périphérique au moins partielle, soit en des bandes sensiblement circulaires et arrangées concentriquement entre elles, dans le cas d'une parcelle (P) de forme discoïdale avec une fourrière (F) s'étendant selon un rayon.

5. Procédé selon l'une quelconque des revendications 1 à 4, **caractérisé en ce qu'**il consiste à mettre en oeuvre des robots agricoles (R1, R2, Ri) réalisant le même type de travail, lesdits robots présentant préférentiellement des largeurs de travail (Lr) identiques, et étant avantageusement d'un même type.

6. Procédé selon l'une quelconque des revendications 1 à 5, **caractérisé en ce qu'**il consiste à prévoir, entre au moins deux zones de travail (Z1, Z2, Zj) voisines, une zone intermédiaire (Z') en forme de bande ne devant pas subir de travail par les robots agricoles (R1, R2, Ri).

7. Procédé selon l'une quelconque des revendications 1 à 6, **caractérisé en ce qu'**il consiste à réaliser une nouvelle affectation des zones de travail (Z1, Z2, Zj) non encore travaillées aux différents robots agricoles (R1, R2, Ri) présents et fonctionnels, lors de l'ajout d'un nouveau robot, lors du retrait ou du départ d'un robot ou encore lors d'une mise à l'arrêt d'un robot en activité dans une zone de travail, cette réaffectation étant opérée par le système central commun de gestion et de pilotage (SC) et transmise aux différents robots.

8. Procédé selon l'une quelconque des revendications 1 à 7, **caractérisé en ce que** le déplacement d'un robot agricole (R1, R2, Ri) dans une zone de travail (Z1, Z2, Zj) qui lui a été attribuée de manière exclusive est défini de manière à ne pas croiser un robot d'une zone de travail voisine ou accolée, au niveau des bordures mutuellement aboutantes desdites deux zones.

9. Ensemble agricole pour le travail automatisé de parcelles (P) comprenant une flotte d'au moins deux machines ou robots agricoles (R1, R2, ..., Ri) mobiles, équipés d'outils adéquats, à fonctionnement autonome et indépendant, et un système central commun de gestion et de pilotage (SC) apte à communiquer avec lesdits robots en vue de leur transmettre des consignes et/ou des commandes et de recevoir en retour des informations de fonctionnement et/ou d'état desdits robots, chaque robot étant en outre pourvu d'un dispositif de positionnement ou de localisation par satellites, ensemble dont ledit système central de gestion et de pilotage (SC) comprend des moyens permettant, d'une part, de subdiviser ladite parcelle (P) à travailler, préalablement au début du travail de cette parcelle (P) et/ou progressivement durant le travail de celle-ci, en au moins deux zones de travail distinctes (Z1, Z2, ..., Zj), l'ensemble desdites zones de travail couvrant, de manière avantageuse, surfaciquement sensiblement la totalité de la parcelle et chaque zone de travail consistant en une fraction de parcelle en forme de bande, et, d'autre part, d'affecter chaque zone de travail (Z1, Z2, Zj) exclusivement à un des robots agricoles (R1, R2, Ri), au moins pendant la phase de travail considéré, la largeur (Lz) de la majorité des zones de travail (Z1, Z2, Zj) étant supérieure ou égale à la largeur de travail (Lr) du robot agricole (R1, R2, Ri) qui lui est exclusivement affecté, en étant avantageusement égale à un multiple, préférentiellement entier, de la largeur de travail (Lr) du robot agricole (R1, R2, Ri) qui lui est exclusivement affecté et l'affectation exclusive, en cours de réalisation du travail de la parcelle (P), des zones de travail (Z1, Z2, Zj) non encore travaillées aux différents robots agricoles (R1, R2, Ri) s'effectuant progressivement en fonction de l'achèvement des travaux en cours dans les différentes zones de travail par les robots agricoles qui leur ont été respectivement affectés et en ce que le système central commun de gestion et de pilotage (SC) permet de s'affranchir de toute nécessité de communication entre les robots agricoles (R1, R2, Ri).

10. Ensemble selon la revendication 9, **caractérisé en ce qu'**il met en œuvre le procédé selon l'une quelconque des revendications 1 à 8 pour assurer la gestion de la flotte de robots (R1, R2, Ri) durant le travail d'une parcelle (P).

## Patentansprüche

1. Verfahren zur gleichzeitigen Bearbeitung einer Parzelle (P) durch eine Flotte von mindestens zwei autonom und unabhängig arbeitenden landwirtschaftlichen Maschinen oder Robotern (R1, R2, ..., Ri) gemäß den Anweisungen und/oder Befehlen, die von einem gemeinsamen zentralen Verwaltungs- und Steuerungssystem (SC) übermittelt werden, Verfahren, das darin besteht, die zu bearbeitende Parzelle (P) vor Beginn der Bearbeitung dieser Parzelle (P) oder schrittweise während der Bearbeitung derselben in mindestens zwei getrennte Arbeitsbereiche (Z1, Z2, ..., Zj) zu unterteilen, wobei die Gesamtheit der Arbeitsbereiche flächenmäßig im Wesentlichen die gesamte nutzbare Fläche der Parzelle abdeckt und jeder Arbeitsbereich aus einem streifenförmigen Teil der Parzelle besteht, und jeden Arbeitsbereich (Z1, Z2, Zj) ausschließlich einem der landwirtschaftlichen Roboter (R1, R2, Ri) zuzuweisen, zumindest während der betreffenden Arbeitsphase, wobei die Breite jedes Arbeitsbereichs (Z1, Z2, Zj) einem Vielfachen entspricht, größer oder gleich 1 und vorzugsweise ganzzahlig, der Arbeitsbreite (Lr) des landwirtschaftlichen Roboters (R1, R2, Ri), der ihm ausschließlich zugewiesen ist und die ausschließliche Zuweisung der noch nicht bearbeiteten Arbeitsbereiche (Z1, Z2, Zj) während der Bearbeitung der Parzelle (P) an die verschiedenen landwirtschaftlichen Roboter (R1, R2, Ri) schrittweise entsprechend dem Abschluss der laufenden Arbeiten in den verschiedenen Arbeitsbereichen durch die ihnen jeweils zugewiesenen landwirtschaftlichen Roboter erfolgt, und wobei das gemeinsame zentrale Verwaltungs- und Steuerungssystem (SC) es ermöglicht, jegliche Kommunikation zwischen den landwirtschaftlichen Robotern (R1, R2, Ri) unnötig zu machen.

2. Verfahren nach Anspruch 1, **dadurch gekennzeichnet, dass** nach einer anfänglichen Zuweisung eines ersten exklusiven Arbeitsbereichs an jeden landwirtschaftlichen Roboter die folgenden Zuweisungen während der Ausführung der Arbeiten auf der Parzelle (P) der noch zu bearbeitenden Arbeitsbereiche für die verschiedenen landwirtschaftlichen Roboter schrittweise entsprechend der Fertigstellung der laufenden Arbeiten in den verschiedenen Arbeitsbereichen durch die ihnen jeweils zugewiesenen landwirtschaftlichen Roboter erfolgt.

3. Verfahren nach Anspruch 1, **dadurch gekennzeichnet, dass** alle Arbeitsbereiche (Z1, Z2, Zj) den verschiedenen landwirtschaftlichen Robotern (R1, R2, Ri) zugewiesen werden, wobei zu Beginn der Arbeit auf der Parzelle (P) jedem Bereich ausschließlich ein Roboter zugewiesen wird und zu einem bestimmten Zeitpunkt während der Ausführung der Arbeit auf der Parzelle (P) eine mögliche Neuzuweisung der noch nicht bearbeiteten Arbeitsbereiche zwischen den verschiedenen landwirtschaftlichen Robotern erfolgen kann, und zwar in Abhängigkeit von der Entwicklung des Verhaltens, der Verfügbarkeit und/oder dem Zustand der verschiedenen Roboter oder auch vom tatsächlichen oder vorhersehbaren Fortschritt der Arbeiten in den Arbeitsbereichen, die zu dem oben genannten Zeitpunkt noch von den ihnen ausschließlich zugewiesenen jeweiligen Robotern bearbeitet werden.

4. Verfahren nach einem der Ansprüche 1 bos 3, **dadurch gekennzeichnet, dass** zumindest die anfängliche oder erste Zuweisung der exklusiven Arbeitsbereiche (Z1, Z2, Zj) einer alternativen, zyklischen, sich wiederholenden oder willkürlichen Zuweisungsregel der verschiedenen Roboter zu den benachbarten aufeinanderfolgenden Arbeitsbereichen folgt, die sich aus der Aufteilung der Parzelle (P) ergeben, wobei diese Arbeitsbereiche entweder aus nebeneinander angeordneten, im Wesentlichen geradlinigen Streifen bestehen können, im Falle einer polygonalen Parzelle (P) mit einem zumindest teilweise umlaufenden Vorgewende (F), oder aus im Wesentlichen kreisförmigen und konzentrisch zueinander angeordneten Streifen im Fall einer scheibenförmigen Parzelle (P) mit einer sich entlang eines Radius erstreckenden Vorgewende (F).

5. Verfahren nach einem der Ansprüche 1 bis 4, **dadurch gekennzeichnet, dass** es darin besteht, landwirtschaftliche Roboter (R1, R2, Ri) einzusetzen, die die gleiche Art von Arbeit ausführen, wobei diese Roboter vorzugsweise identische Arbeitsbreiten (Lr) aufweisen und vorteilhafterweise vom gleichen Typ sind.

6. Verfahren nach einem der Ansprüche 1 bis 5, **dadurch gekennzeichnet, dass** es darin besteht, zwischen mindestens zwei benachbarten Arbeitsbereichen (Z1, Z2, Zj) eine streifenförmige Zwischenzone (Z') vorzusehen, die von den landwirtschaftlichen Robotern (R1, R2, Ri) nicht bearbeitet werden darf.

7. Verfahren nach einem der Ansprüche 1 bis 6, **dadurch gekennzeichnet, dass** es darin besteht, eine Neuzuweisung der Arbeitsbereiche (Z1, Z2, Zj) vorzunehmen, die noch nicht bearbeitet wurden, auf die verschiedenen vorhandenen und funktionsfähigen landwirtschaftlichen Roboter (R1, R2, Ri), wenn ein neuer Roboter hinzugefügt wird, wenn ein Roboter entfernt wird oder wegfährt oder wenn ein Roboter, der in einem Arbeitsbereich tätig ist, abgeschaltet wird, wobei diese Neuzuweisung vom gemeinsamen zentralen Verwaltungs- und Steuerungssystem (SC) durchgeführt und an die verschiedenen Roboter übertragen wird.

8. Verfahren nach einem der Ansprüche 1 bis 7, **dadurch gekennzeichnet, dass** die Bewegung eines landwirtschaftlichen Roboters (R1, R2, Ri) in einem ihm ausschließlich zugewiesenen Arbeitsbereich (Z1, Z2, Zj) so definiert ist, dass er einen Roboter aus einem benachbarten oder angrenzenden Arbeitsbereich an den miteinander verbundenen Rändern dieser beiden Bereiche nicht kreuzt.

9. Landwirtschaftseinheit für die automatisierte Bearbeitung von Parzellen (P), die eine Flotte von mindestens zwei mobilen landwirtschaftlichen Maschinen oder Robotern (R1, R2, ..., Ri) umfasst, die mit geeigneten Werkzeugen ausgestattet sind, autonom und unabhängig arbeiten, sowie ein gemeinsames zentrales Verwaltungs- und Steuerungssystem (SC), das mit den genannten Robotern kommunizieren kann, um ihnen Anweisungen und/oder Befehle zu übermitteln und im Gegenzug Informationen über den Betrieb und/oder den Status der genannten Roboter zu erhalten, wobei jeder Roboter zusätzlich mit einer Positionierungs- oder Ortungsvorrichtung über Satelliten ausgestattet ist, Einheit deren zentrales Verwaltungs- und Steuerungssystem (SC) Mittel umfasst, die es einerseits ermöglichen, die zu bearbeitende Parzelle (P) vor Beginn der Bearbeitung dieser Parzelle (P) und/oder schrittweise während der Bearbeitung derselben in mindestens zwei getrennte Arbeitsbereiche (Z1, Z2, ..., Zj) zu unterteilen, wobei die Gesamtheit der Arbeitsbereiche vorteilhafterweise flächenmäßig im Wesentlichen die gesamte Parzelle abdeckt und jeder Arbeitsbereich aus einem streifenförmigen Teil der Parzelle besteht, und andererseits jeden Arbeitsbereich (Z1, Z2, Zj) zumindest während der betreffenden Arbeitsphase ausschließlich einem der landwirtschaftlichen Roboter (R1, R2, Ri) zuzuweisen, wobei die Breite (Lz) der meisten Arbeitsbereiche (Z1, Z2, Zj) größer oder gleich der Arbeitsbreite (Lr) des landwirtschaftlichen Roboters (R1, R2, Ri) ist, der ihm ausschließlich zugewiesen ist, und vorteilhafterweise einem Vielfachen, vorzugsweise einem ganzzahligen Vielfachen, der Arbeitsbreite (Lr) des landwirtschaftlichen Roboters (R1, R2, Ri), der ihm ausschließlich zugewiesen ist, und die ausschließliche Zuweisung, während der Bearbeitung der Parzelle (P), der noch nicht bearbeiteten Arbeitsbereiche (Z1, Z2, Zj) an die verschiedenen landwirtschaftlichen Roboter (R1, R2, Ri), schrittweise entsprechend der Fertigstellung der laufenden Arbeiten in den verschiedenen Arbeitsbereichen durch die ihnen jeweils zugewiesenen landwirtschaftlichen Roboter erfolgt, und dass das gemeinsame zentrale Verwaltungs- und Steuerungssystem (SC) jegliche Notwendigkeit der Kommunikation zwischen den landwirtschaftliche Roboter (R1, R2, Ri) unnötig macht.

10. Einheit nach Anspruch 9, **dadurch gekennzeichnet, dass** es das Verfahren nach einem der Ansprüche 1 bis 8 anwendet, um die Verwaltung der Roboterflotte (R1, R2, Ri) während der Bearbeitung einer Parzelle (P) sicherzustellen.

## Claims

1. Work method for simultaneously working a plot (P) by a fleet of at least two autonomous and independent agricultural machines or robots (R1, R2, ..., Ri), according to instructions and/or commands transmitted by a common central management and control system (SC), a method that is **characterised in that** it consists in subdividing said plot (P) to be processed, prior to the start of work on this plot (P) or progressively during work on it, into at least two distinct work zones (Z1, Z2, ..., Zj), such that the combined surface area of these work zones advantageously covers substantially all of the exploitable surface area of the plot and each work zone consists of a fraction of the plot in the form of a strip, and assigning each work zone (Z1, Z2, Zj) exclusively to one of the agricultural robots (R1, R2, Ri), at least during the work phase in question, the width (Lz) of the majority of the work zones (Z1, Z2, Zj) being equal to a multiple, greater than or equal to 1 and preferentially whole, of the working width (Lr) of the agricultural robot (R1, R2, Ri) exclusively assigned to it; and the exclusive assignment, during work on the plot (P), of work zones (Z1, Z2, Zj) not yet worked, respectively to the various agricultural robots (R1, R2, Ri), being achieved progressively according to the completion of work in the various work zones by the agricultural robots that have respectively been assigned to them, and **in that** the common central management and control system (SC) eliminates the need for communication between the agricultural robots (R1, R2, Ri).

2. Method according to claim 1, **characterised in that**, after an initial assignment of a first work zone exclusive to each agricultural robot, the following assignments, during work on the plot (P), of the work zones that have yet to be worked to different agricultural robots is carried out progressively according to the completion of work in the various work zones by the agricultural robots respectively assigned to them.

3. Method according to claim 1, **characterised in that** all of the work zones (Z1, Z2, Zj) are allocated to the various agricultural robots (R1, R2, Ri), with an exclusive assignment of one robot per zone, at the start of work on the plot (P), with the possibility of reallocation of the yet unworked work zones, between the various agricultural robots in question, taking place at a determined moment during work on the plot (P), according to the development of the behaviour, the availability and/or the status of the various robots, or indeed the actual or foreseeable progress of the work in the work zones still being worked at that determined moment by the respective robots that have been exclusively assigned to them.

4. Method according to any one of claims 1 to 3, **characterised in that** at least the initial assignment or first assignment of the exclusive work zones (Z1, Z2, Zj) follows an alternative allocation rule, cyclical, repetitive or arbitrary, for the various robots in successive neighbouring work zones resulting from the subdivision of the plot (P), said work zones consisting either of substantially straight strips arranged side by side, in the case of a polygonal plot (P) with at least a partial peripheral headland (F), or of substantially circular strips arranged concentrically, in the case of a disc-shaped plot (P) with a headland (F) extending along a radius.

5. Method according to any of claims 1 to 4, **characterised in that** it consists in implementing agricultural robots (R1, R2, Ri) performing the same type of work, said robots preferably having identical working widths (Lr), and advantageously being of the same type.

6. Method according to any of claims 1 to 5, **characterised in that** it consists in providing, between at least two neighbouring work zones (Z1, Z2, Zj), an intermediate zone (Z') in the form of a band that should not be worked by the agricultural robots (R1, R2, Ri).

7. Method according to any one of claims 1 to 6, **characterised in that** it consists of performing a new assignment of the work zones (Z1, Z2, Zj) not yet worked to the various agricultural robots (R1, R2, Ri) present and operational, when adding a new robot, when a robot is withdrawn or leaves, or when an active robot is shut down in a work zone, this reassignment being operated by the common central management and control system (SC) and transmitted to the various robots.

8. Method according to any one of claims 1 to 8, **characterised in that** the movement of an agricultural robot (R1, R2, Ri) in a work zone (Z1, Z2, Zj) that has been exclusively allocated to it is defined so that it does not cross paths with a robot from a neighbouring or adjacent work zone, in the borders adjoining said two zones.

9. Agricultural machinery assembly for the automated working of plots (P) consisting of a fleet of at least two autonomous and independent agricultural machines or robots (R1, R2, ..., Ri), mobile and equipped with appropriate tools, and a common central management and control system (SC) suitable for communicating with said robots in order to send them instructions and/or commands and in turn to receive information on the operation and/or status of said robots, each robot furthermore being equipped with a satellite positioning or location device, an assembly **characterised in that** said central management and control system (SC) includes means for, firstly, subdividing said plot (P) to be worked, prior to the start of work on this plot (P) and/or progressively during work on it, into at least two distinct work zones (Z1, Z2, ..., Zj), such that the combined surface area of these work zones advantageously covers substantially all of the surface area of the plot and each work zone consists of a fraction of the plot in the form of a strip and, secondly, assigning each work zone (Z1, Z2, Zj) exclusively to one of the agricultural robots (R1, R2, Ri), at least during the work phase in question, the width (Lz) of the majority of the work zones (Z1, Z2, Zj) being greater than or equal to the working width (Lr) of the agricultural robot (R1, R2, Ri) exclusively assigned to it, being advantageously equal to a multiple, preferably whole, of the working width (Lr) of the agricultural robot (R1, R2, Ri) exclusively assigned to it; and the exclusive assignment, during work on the plot (P), of work zones (Z1, Z2, Zj) not yet worked to the various agricultural robots (R1, R2, Ri) being achieved progressively according to the completion of work in the various work zones by the agricultural robots that have respectively been assigned to them and **in that** the common central management and control system (SC) eliminates the need for communication between the agricultural robots (R1, R2, Ri).

10. Assembly according to claim 9, **characterised in that** it implements the method according to any one of claims 1 to 8 to manage the fleet of robots (R1, R2, Ri) during the working of a plot (P).
